# EUROPEAN PATENT APPLICATION

(11) **EP 4 491 324 A1**
(43) Date of publication of application: **15.01.2025**
(21) Application number: 23184677.5
(22) Date of filing: 11.07.2023
(51) Int. Cl.: B23Q 1/00, B23Q 3/08

(54) **A CLAMPING SYSTEM APPLIED FOR A MACHINE TOOL**

(71) Applicant: System 3R International AB, 162 50 Vällingby (SE)
(72) Inventor: Kjellberg, Mats, 162 70 Vällingby (SE)
(74) Representative: Li Schrag, Yue

(57) **Abstract**

The present invention is directed to a clamping system comprising a chuck and a pallet for mounting an object thereon. The chuck comprises a plurality of chuck reference elements in X-, Y- and Z-directions, wherein the pallet comprises a plurality of pallet reference elements in X-, Y- and Z directions, wherein a pallet locking mechanism is provided on the pallet and a chuck locking mechanism is provided on the chuck, wherein the pallet can be clamped to the chuck by interacting the pallet locking mechanism with the chuck locking mechanism, wherein when the pallet is clamped to the chuck, the pallet reference elements are aligned with the chuck reference elements in X-, Y- and Z-directions. The pallet includes a vacuum ejector to generate a vacuum and a pallet suction opening communicatively connected to the vacuum ejector for holding the object positioned on the pallet by the generated vacuum.

## Description

### FIELD OF THE INVENTION

The present invention is related to a clamping system applied to machine tools comprising a chuck and a pallet that can be clamped to the chuck. In particular, the pallet is applied for receiving an object thereon such as a workpiece, and the chuck is applied to being mounted on a machine table.

### BACKGROUND OF INVENTION

Clamping systems are widely used in the field of machining such as milling, turning, electrical discharge machining or laser machining. Such machining processes are conducted by the machines. In order to hold the workpiece or machining tools securely in the machine, clamping systems are essential, because high forces could be applied on the workpiece or on the machining tool.

To ensure the machining sufficiency it is relevant to have a clamping system which can quickly clamp and unclamp the workpiece or machine tool without wasting too much machine time. The clamping system includes a chuck and a pallet that can fulfill such requirement. The chuck is normally mounted on the machine table. The workpiece can be mounted on the pallet in advance before the machining. The pallet having the workpiece thereon can be clamped into the chuck and released from the chuck very quickly. Typically, the pallet can be quickly connected to chuck and disconnected from the chuck. Moreover, connecting and disconnecting can even be conducted automatically, for example using robots to save time.

US 9 108 286 B2 discloses a clamping device for a tool or a workpiece. The clamping device comprises at least one chuck and at least one holder for the workpiece or the tool. The holder has an upper part and a hollow tubular extension. The upper part is detachably connected to the hollow tubular extension such that the hollow tubular extension remains hollow when connected to the upper part. The upper part defines a flat upper surface for mounting the tool or workpiece thereon.

US 8 413 973 discloses a clamping fixture comprising a chuck and fixedly securable thereto releasably a clamping pallet. The chuck is provided with four centering pins arranged at the chuck cooperating with centering openings arranged at the clamping pallet such that the clamping pallet when chucked in the chuck is oriented in the X and Y direction.

All these clamping systems provide a quick and secure clamping function between the pallet and the chuck. However, the known clamping systems requires manual works to fix the workpiece on the pallet by fixing means, such as screws. After the machining, the manufactured workpiece must be removed from the pallet by releasing the fixing means. Such manual works is time-consuming.

### SUMMARY OF THE INVENTION

It is an objective of this invention to provide a clamping system having a chuck and a pallet such that an object can be secured on the pallet automatically. In particular, it is an objective to provide a clamping system having a chuck and a pallet such that the object can be quickly mounted on the pallet and dismounted from the pallet.

According to the present invention, these objectives are achieved through the features of independent claims. In addition, further advantageous embodiments follow from the dependent claims and the description.

According to the present invention, a clamping system comprising a chuck and a pallet for mounting an object thereon. The chuck comprises a plurality of chuck reference elements in X-, Y- and Z-directions. The pallet comprises a plurality of pallet reference elements in X-, Y- and Z-directions. A pallet locking mechanism is provided on the pallet and a chuck locking mechanism is provided on the chuck. The pallet can be clamped to the chuck by interacting the pallet locking mechanism with the chuck locking mechanism. When the pallet is clamped to the chuck, the pallet reference elements are aligned with the chuck reference elements in X-, Y- and Z-directions. The pallet includes a vacuum ejector to generate a vacuum and a pallet suction opening communicatively connected to the vacuum ejector for holding the object positioned on the pallet by the generated vacuum.

The clamping systems are used to hold the object such as a workpiece to be machined on the machine table for machining. During machining, high cutting forces may be exerted on the workpiece. These high cutting forces can also be transmitted to the clamping system holding the workpiece on the machining table. Therefore, the clamping system must be rigid and must be able to withstand the applied forces to reliably maintain the positioning of the workpiece during the whole machining. The pallet and/or chuck can be made in aluminum or high-alloy steel. For such clamping system, it is relevant to precisely position the pallet and the chuck to each other. Therefore, reference elements are essential. A stable and exact reference system can reduce the idle times of the machines. Thus, referencing elements in x-, y- and z-directions are provided such that the position of the pallet is precisely determined. The reference system minimizes setting-up times, increases machine capacity and provides a basis for automated production. Rapid and precise pallet changing can be realized. This ensures a high repeatability respectively high accuracy of the positioning. Preferably, reference elements in Z direction are automatically air-blast cleaned, through nozzles in the Z-references of the chuck.

Particularly, such clamping system is applied often together with an automation system for automatically changing the pallet. Hence, the pallet locking mechanism and the chuck locking mechanism are designed to realize a fast and reliable clamping. The pallet locking mechanism can include a drawbar with floating bayonet fitting. By clamping the drawbar, it is interacted with the chuck locking mechanism. However, other pallet locking mechanism can also be applied for the clamping system of the present invention.

Normally, a chuck is mounted on the machine table before the machining. If the object is a workpiece, it is mounted in advance on the pallet. In particular, a plurality of workpieces are mounted on the plurality of pallets before the machining during the preparation phase, such that the pallet with the workpiece can be quickly changed during the machining to ensure the machining efficiency. However, the workpiece must be manually fixed on the pallet by e.g. screws. Thus, mounting the workpiece on the pallet requires additional time and therefore increases the costs of the machining. Applying vacuum to hold the workpiece is a fast and secure solution. The clamping system having the vacuum ejector in the pallet can further improve the machining efficiency and reduce the costs.

The vacuum ejector is designed to produce vacuum based on e.g. venturi effect. The vacuum ejector has a tubular body. A working fluid is fed into the vacuum ejector and flows through the tubular body having narrow and wide cross-sectional area. The velocity of the working fluid is influenced by the different cross-sectional area. The working fluid flows out of the vacuum ejector with a high velocity and therefore results in low pressure in the vacuum ejector. By this way, the vacuum is generated. The working fluid can be liquid or pressurized air. In a preferred variant, the pressured air is used as the working fluid. Alternatively, nitrogen gas is used as the working fluid. The pressurized air is simpler for handling than liquid. Additionally, pressurized air is supplied into the chuck, because the chuck is a pneumatic chuck. By this way, no additional pipes are required for supplying the working fluid from extern into the vacuum ejector. The vacuum ejector includes an ejector inlet for supplying the working fluid, an ejector outlet for discharging the working fluid and an ejector suction opening.

In some embodiments, the pallet is provided with a recess arranged inside the pallet for arranging the vacuum ejector therein, in particular, the longitudinal direction of the recess is in parallel to the top surface of the pallet. By this way, the vacuum ejector is fully embedded in the pallet.

In some embodiments, the pallet is provided with an air inlet for supplying pressurized air into the vacuum ejector and the air inlet is arranged in a manner that the pressurized air supplied into the chuck enters into the air inlet automatically, when the pallet is clamped to the chuck.

Preferably, the air inlet is arranged on the bottom surface of the pallet. Additionally, an air supply outlet is arranged on the top surface of the chuck and the air inlet of the pallet is automatically aligned with the air supply outlet of the chuck when the pallet is claimed with the chuck. This provides a simple construction for supplying the pressurized air into the pallet. Since no additional pipes must be connected to the pallet from extern, automatic changing of pallet by e.g. a pallet changer is ensured. The air inlet may be a hole. At least one air channel can be formed in the pallet to connect the air inlet to the ejector air inlet. The air supply outlet on the chuck may also be a hole which is connected to the air channels formed in the chuck in which the pressured air can flow. Normally, pressurized air is supplied into the chuck for clamping the pallet from external pipes. Chuck is often mounted on the machine table and must not be changed frequently. During machining, pallet must be changed frequently. Thus, pallet must be automatically changeable to improve the machining sufficiency. Consequently, it is an advantage to provide the pallet without external connections with pipes. Preferably, the connection of the air inlet on the pallet and the air outlet on the chuck is sealed by a sealing element, for example a sealing ring. Preferably, this connection is sealed on the pallet and/or on the chuck.

In one variant, the pallet suction opening is covered by a filter, in particular the filter is a mesh filter. This can prevent dirt or chips caused by machining falling into the suction opening. In particular, a sealing element is arranged around the pallet suction opening to ensure the suction when the object is place on the pallet suction opening.

In an advantageous variant, a pallet sensing mechanism is integrated in the pallet and a chuck sensing mechanism is integrated in the chuck, wherein the pallet vacuum sensing mechanism and the chuck sensing mechanism are configured that they are automatically aligned when the pallet is clamped with the chuck. In particular, the pallet sensing mechanism and the chuck sensing mechanism are applied for monitoring the condition of the vacuum generated by the vacuum ejector, for example, it can detect if the vacuum pressure is maintained during the machining. For safety reason, it is advantageous to monitor the condition of the generated vacuum be able to react in case of bad vacuum condition.

Preferably, the pallet sensing mechanism includes a pallet sensing hole which is provided on the bottom surface of the pallet and is communicatively connected to the pallet suction opening.

Moreover, a chuck sensing hole is provided on the top surface of the chuck. When the pallet is clamped with the chuck, the pallet sensing hole is automatically aligned with the chuck sensing hole. Normally, a vacuum detection device is arranged at outside of the clamping system, for example in the machine cabinet or robot cabinet to monitor the clamping status of the chuck. Arranging the sensing hole on the pallet can benefit from this existing device, since the vacuum condition at the chuck sensing hole can be monitored by the vacuum detection device. When the pallet sensing hole is aligned with the sensing hole of the chuck, the vacuum condition at the pallet sensing hole can be measured by the detection device arranged for example, in the machine cabinet or robot cabinet.

In some embodiments, an ejector entry connected to the recess is provided on the surface of the pallet for inserting the vacuum ejector into the recess arranged inside the pallet and the ejector can be covered by a cap having an air outlet formed thereon. This air outlet is connected to the ejector outlet to discharge the air from the ejector to outside of the pallet.

In a preferred variant, the ejector suction opening is connected to the pallet suction opening through at least one channel and/or at least one hole. Depending on the size of the pallet, the pallet suction opening can have different dimensions and/or shapes. The dimension of the pallet suction opening is in most of applications different from the dimension of the ejector suction opening. In addition, the ejector suction opening can be positioned at different positions inside the pallet. Therefore, some connecting elements are needed to connect the ejector suction opening to the pallet suction opening.

In some embodiments, the clamping system further comprises a fixture for being mounted on the pallet for holding the workpiece, wherein the fixture has at least one fixture suction opening which is connected with the pallet suction opening. Sometimes, the fixture is first mounted on the pallet and the workpiece is mounted on the fixture to provide more flexibility for the custom using the clamping system. The fixture is designed in a manner that the vacuum generated in the pallet can reach the fixture and be distributed at the different area of the fixture. The pallet vacuum suction opening is connected to the fixture suction opening by channels, in particular formed on the bottom of the fixture.

In a preferred variant, the fixture includes at least two fixture suction openings for providing at least two suction areas and a plurality of fixture sealing grooves, wherein a fixture sealing element can be inserted into the fixture sealing groove for selectively activate the fixture suction areas. Alternatively, sealing slots or sealing holes can be applied instead of sealing grooves. The fixture sealing element may be a O-ring or other sealing means.

In an advantageous variant, a liquid chamber is arranged below the pallet suction opening for storing the liquid entering from the pallet suction opening.

Preferably, a second valve is mounted at one end of the liquid chamber to close or open the liquid chamber. During machining, liquid may enter into the pallet through the pallet suction opening which can negatively influence the suction function. The liquid should be evacuated from time to time to avoid clogging up the ejector. Arranging the valve at the output of the liquid chamber enables liquid chamber to be emptied automatically. The valve can be controlled by the control unit which also controls the clamping system. When the vacuum active the valve is closed and when the vacuum is inactive, the valve is open for allowing the liquid flowing out.

In the present invention, the clamping system refers to the first clamping system or the second clamping system. The first clamping system and the second clamping system refers to two different embodiments of the clamping system. The first clamping system is smaller than the second clamping system. However, the vacuum ejector can also be applied in other clamping systems not only limited to these two clamping systems. For clarity all the elements of the first clamping system are denoted with the term first and the all the elements of the second clamping system are denoted with the term second. The general terms used in the present invention should include the element denoted with the term first and/or second.

In particular, the vacuum ejector refers to a first vacuum ejector or a second vacuum ejector. The vacuum ejector can have different dimensions. All vacuum ejectors which can be mounted inside of the pallet and can deliver the required pressure are applicable for the present invention. For example, the second pallet is larger than the first pallet, so the second vacuum ejector is larger than the first vacuum ejector.

### BRIEF DESCRIPTION OF THE DRAWINGS

In the following, a more particular description of the present invention is further described. The embodiments are described and explained with details with reference to accompanying drawings in which:
Fig.1 illustrates a three-dimensional view of a first pallet;
Fig.2 illustrates a side view of the first pallet;
Fig.3 illustrates a bottom view of the first pallet;
Fig.4 illustrates a top view of the first pallet;
Fig.5 illustrates a side view of the first pallet with a sectional view of a vacuum ejector;
Fig.6a, Fig.6b illustrate an application of a first clamping system in unclamped state and clamped state, respectively;
Fig.7a, Fig.7b illustrate another application of a first clamping system in unclamped and clamped state, respectively;
Fig.8 illustrates a three-dimensional view of a second pallet;
Fig.9 illustrates a side view with a partially sectional view of the second pallet;
Fig.10 illustrates a top view of the second pallet;
Fig.11a, Fig.11b illustrates sectional views of the second pallet;
Fig.12 illustrates a sectional view of one part of the second pallet;
Fig.13 illustrates a bottom view of the second pallet;
Fig.14a, Fig.14b illustrate an application of a second clamping system in unclamped state and clamped state, respectively;
Fig.15a, Fig.15b illustrate another application of a second clamping system in unclamped and clamped state, respectively; and
Fig.16a, Fig.16b, and Fig.16c illustrate examples of selecting the suction area.

### EXEMPLARY EMBODIMENTS

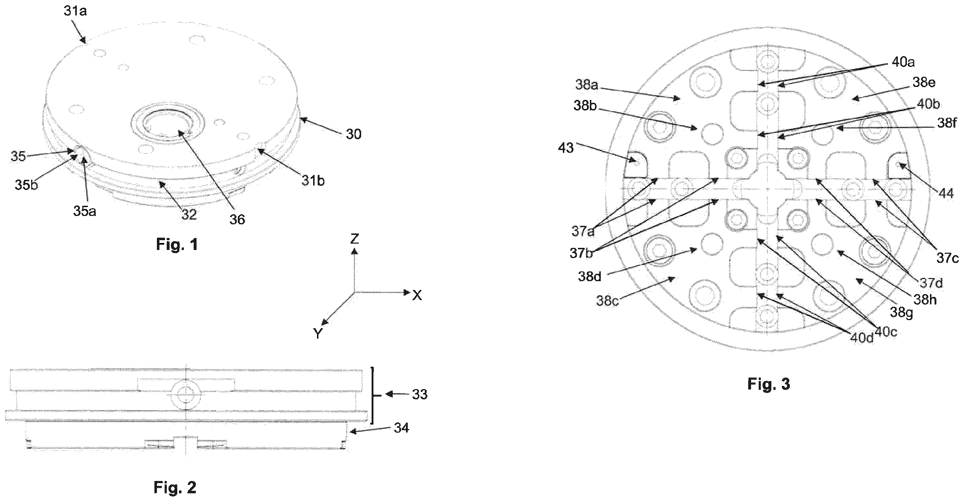

Figures 1 to 5 show a first pallet applied for a first clamping system.

Figure 1 depicts a three-dimensional view of a first pallet 30 applied for a first clamping system of the present invention. The first pallet has a round shape and a defined height. However, the pallet can have a different shape than the shapes shown in the figures. A first vacuum ejector is integrated inside the first pallet. A first ejector entry 35 is provided on the side surface of the first pallet, namely on its periphery. The first vacuum ejector is inserted through the first ejector entry into the first pallet and embedded in the first pallet. When the first vacuum ejector is inserted into the first pallet, the first ejector entry is covered by a first cap 35b to prevent the first vacuum ejector falling out of the first pallet. A first air outlet 35a is provided on the first cap to allow the air flowing out of the first vacuum ejector can flow out of the first pallet. A first pallet suction opening 36 is arranged on the top surface of the first pallet and connected to the first vacuum ejector inside the first pallet. A first pair of slots 31a, 31b and a first groove 32 are formed on the side surface of the first pallet for automatic handling. A robot can grip the first pallet at this position to automatically mount the first pallet to the first chuck and dismounted the first pallet from the first chuck.

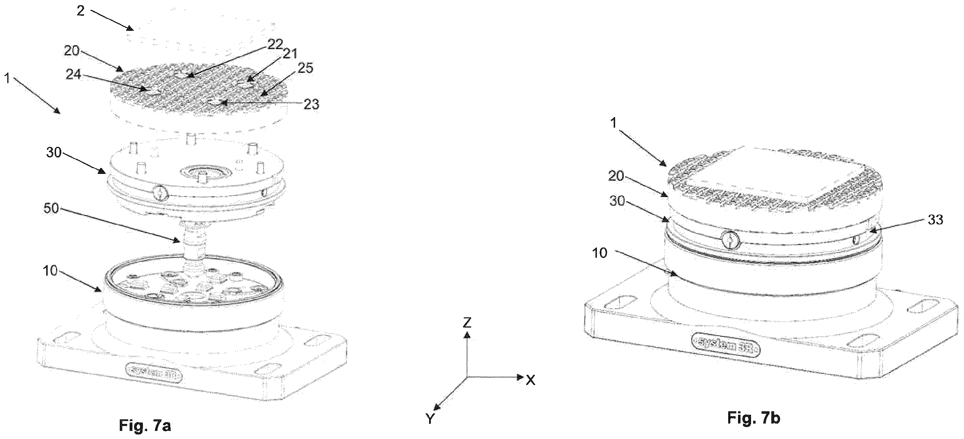

As shown in figure 2 illustrating a side view of the first pallet, the first pallet is made in one-piece. However, it can be divided into two sections in its height (Z-direction), namely an upper section 33 and a lower section 34. The lower section serves mainly for interaction with the chuck locking mechanism of a first chuck. When the first pallet is clamped into the first chuck, the lower section is positioned within the first chuck and the upper section stands at outside of the first chuck as shown in the figure 7b. The first pair of slots and the first groove for automatic handling are normally provided on the upper section of the first pallet, such that the slots and the groove can be accessed by the robot gripper also in the clamped state. In the example shown in the figures, the first vacuum ejector is received in the upper section of the first pallet. However, it is not excluded to embed the first vacuum ejector in the lower section of the first pallet.

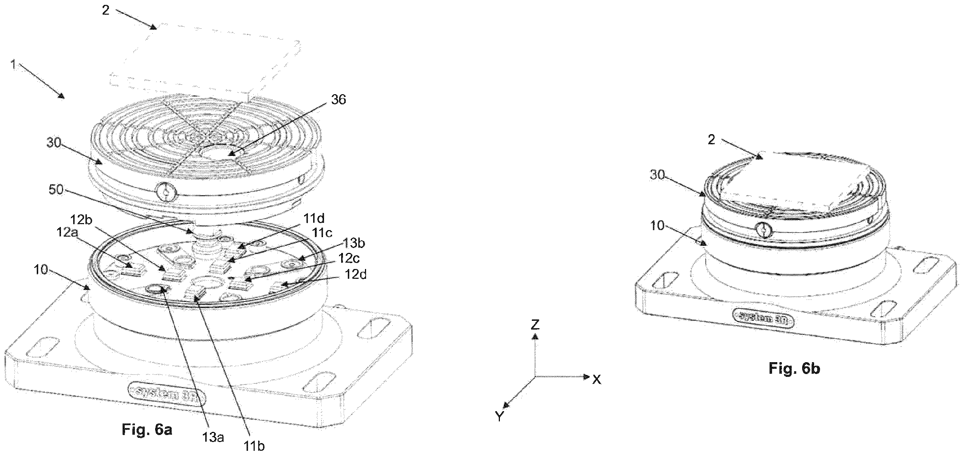

Figure 3 shows a bottom view of the first pallet. The pallet reference elements are provided on the pallet in X-, Y- and Z-directions. They are defined as pallet X reference element, pallet Y reference element and pallet Z reference element. A plurality of pallet X reference elements 37a, 37b, 37c, 37d, a plurality of pallet Y reference elements 40a, 40b, 40c, 40d and a plurality of pallet Z reference elements 38a, 38b, 38c, 38d, 38e, 38f, 38g, 38h, are provided on the bottom surface of the first pallet. In the variant shown in the figure 3, the reference elements are manufactured separately on a thin plate and fixed on the first pallet. However, it is also possible to form all reference elements directly on the first pallet forming one piece. Reference elements in X, Y and Z are also provided on the first chuck. They are defined as chuck X reference element, chuck Y reference element and chuck Z reference element. As shown in figure 6a, there are a plurality of chuck X reference elements 12a, 12b, 12c, 12d, a plurality of chuck Y reference elements 11b, 11c, 11d and a plurality of chuck Z reference elements 13a, 13b provided on the top surface of the first chuck 10. Not all reference elements are indicated in the figure 6a. Typically, there are the same number of reference elements on the first pallet and on the first chuck.

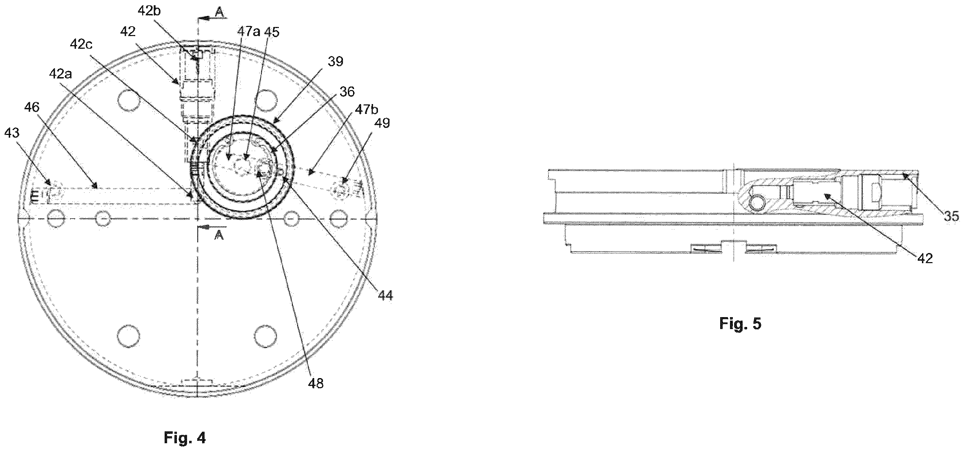

Figure 4 depicts a top view of the first pallet. Figure 5 illustrates a sectional view cut along the line A-A shown in the figure 4. The first vacuum ejector 42 has an elongated body and lies on a plane in parallel to the top surface of the first pallet such that the height of the pallet is not increased. However, it is not excluded to arrange the first vacuum ejector in another direction. Moreover, the vacuum ejector extends from the first ejector entry 35 into the center of the first pallet. The first vacuum ejector has a first ejector inlet, a first ejector outlet and a first ejector suction opening. In this example, pressurized air is the motive fluid of the vacuum ejector. In order to avoid additional pipes for supplying the pressurized air into the vacuum ejector, the first ejector inlet is connected to a first air inlet 43 by a first air channel 46 enable to use the pressurized air provided to the first chuck. By this way, no additional external pipes are needed to supply the pressurized air into the ejector. This is advantageous for allowing the automatic pallet changing. The first air inlet 43 is provided as a position, where the pressured air coming from the first chuck can be automatically supplied into the first air inlet. Thus, in this example, the first air inlet 43 is formed as a hole on the bottom surface of the first pallet and connected to the first air channel 46. The first chuck is provided with a first air supply outlet on its top surface. When the first pallet is clamped to the first chuck, the first air inlet 43 of the first pallet is precisely aligned with the first air supply outlet of the first chuck such that the pressurized air supplied into the first chuck can further flow into the ejector through the air channels in the chuck, the first air supply outlet of the chuck, the first air inlet of the first pallet and the first air channel of the first pallet.

The first ejector suction opening is connected to the first pallet suction opening 36 through a first vacuum suction channel 47a and a first vacuum hole 45 embedded in the first pallet. One end of the first vacuum suction channel is directly connected with the ejector suction opening. The first vacuum hole is a drilled substantially in the vertical direction to connect the pallet suction opening and the first vacuum channel. On the one hand, the suction opening on the surface of the pallet should be large enough to provide a large area where the object can be sucked by the vacuum. On the other hand, it is to be avoided to bore a large hole in the pallet. Providing the first vacuum hole can fulfill the both requirements, because it transfers the generated vacuum from the ejector to the pallet suction opening and the first vacuum hole is much smaller than the first pallet suction opening. However, it is also possible to directly connect the first vacuum channel to the first pallet suction opening.

Security of the clamping status is also important to ensure the proper machining process, thus, it must be guaranteed that the workpiece is properly held by the vacuum generated by the vacuum ejector. Thus, monitoring the vacuum condition generated by the vacuum ejector can improve the reliability of the system and the security of the machining. As shown in the figure 4, a vacuum sensing arrangement is provided in the first pallet. A first sensing hole 49 is formed on the bottom surface of the first pallet. The first sensing hole is communicatively connected with the first vacuum suction channel. Therefore, the vacuum sensed at the position of the first sensing hole represents also the vacuum condition generated by the ejector. One end of the first sensing hole 49 for monitoring the vacuum is formed on the bottom surface of the first pallet, such that it can be aligned to a sensing hole formed on the first chuck. When the chuck is mounted on the machine table, a vacuum sensing device arranged in the machine table can be communicatively connected to the vacuum sensing hole on the chuck and further connected to the first sensing hole 49 of the first pallet automatically by clamping the first pallet to the first chuck. By this way, no additional sensing device is needed in the clamping system.

In this example shown in the figure 4, the first sensing hole 49 is not directly connected to the first vacuum suction channel 47a but directly connected to the first pallet suction opening through a first vacuum connecting hole 44 and a first vacuum sensing channel 47b. As shown in the figure 4, a first plug 48 is arranged at one end of the first vacuum suction channel in the vertical direction to cut the flow of the vacuum further in the direction of the sensing hole. The first vacuum connecting hole is arrange in the vertical direction to connect the first pallet suction opening to a first vacuum sensing channel 47b, with which the first sensing hole is connected. Such arrangement is to further improve the reliability of the vacuum monitoring. Basically, the first vacuum suction channel 47a and the first vacuum sensing channel 47b can be seen as one channel and cut by the first plug into two sections.

Figures 6a and 6b show one application of the first clamping system comprising a first pallet 30 and a first chuck 10. A workpiece 2 can be directly held by the first pallet through the vacuum generated by the first vacuum ejector, when the workpiece is positioned on the first pallet vacuum opening 36.

Figures 7a and 7b show another application of the first clamping system, in which a first fixture 20 is arranged between the first pallet and the workpiece. Figure 7a illustrates a three-dimensional view of the first clamping system 1 with the first fixture in an unclamped state. This example shows an application of clamping the workpiece on a machine table. The first chuck 10 can be mounted on the machine table which is not shown. The first pallet 30 can be clamped through a drawbar 50 into the chuck. In this example, a drawbar is provided for connecting the first chuck and the first pallet, but it is not mandatory to utilize the drawbar, since other locking mechanism is also possible for clamping the chuck and the pallet. On the top of the first pallet, the first fixture can be mounted. The first fixture has at least one first fixture suction opening 21, 22, 23, 24 for allowing the vacuum going through the opening to hold the workpiece mounted thereon. The first fixture suction openings are through holes. In addition, a plurality of fixture channels are formed on the bottom surface of the first fixture to connect the first fixture suction openings to the first pallet suction opening. By this way, the vacuum generated by the vacuum ejector can go through the first pallet suction opening and the fixture openings to reach the workpiece. Moreover, different suction areas can be activated by inserting a first fixture sealing element into the sealing groove 25 into the first fixture. For example, the first fixture shown in figure 7a has four first fixture suction openings, therefore, the whole surface of the fixture can be divided into four suction areas, each of which is defined around one first fixture suction opening.

Figure 7b shows the state when the worpiece is held by the vacuum on the first fixture and the first pallet is clamped into the first chuck.

Several sealings, e.g. O-rings are provided around the first pallet suction opening and the first fixture suction openings for sealing.

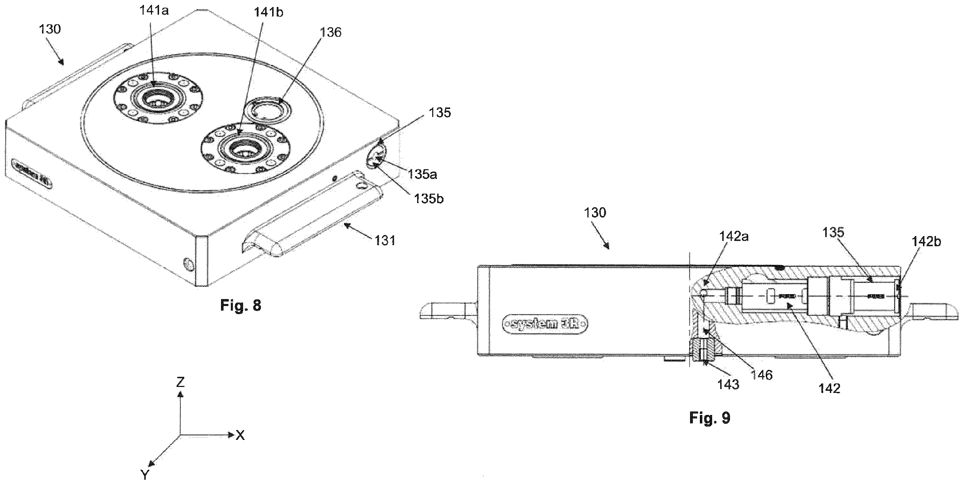

Figures 8 to 12 show a second pallet of a second clamping system of the present invention. The second clamping system is larger than the first clamping system.

Figure 8 shows a three-dimensional view of a second pallet 130 applied for the second clamping system of the present invention. This pallet has a rectangular shape and a certain height. However, the second pallet can have a different shape than the shapes shown in the figures. A second vacuum ejector 142 is integrated inside of the second pallet as shown in the figure 9. A second ejector entry 135 is provided on the side surface of the second pallet, namely on its periphery. When the second vacuum ejector is inserted into the second pallet, the second ejector entry is covered by a second cap 135b to prevent the second vacuum ejector falling out of the second pallet. A second air outlet 135a is provided on the second cap to allow the pressurized air discharged from the second vacuum ejector flowing out of the second pallet. The vacuum ejector is inserted through the second ejector entry into the second pallet and embedded inside the second pallet 135. A second pallet suction opening 136 is arranged on the top surface of the second pallet and connected to the vacuum ejector inside the second pallet. A pair of second pallet gripper 131 is formed on the side surface of the second pallet for automatic handling. A robot can grip the second pallet at this position for automatically mounting and dismounting the pallet.

As shown in figure 9 illustrating a side view with a partially sectional view of the second pallet, the second pallet is made in one-piece. The second vacuum ejector 142 is fully embedded within the second pallet. The second vacuum ejector has an elongated body and lies on a plane e.g. X-Y plane in parallel to the top surface of the second pallet.

Moreover, the vacuum ejector extends from the ejector entry 135 into the center of the second pallet. The second vacuum ejector has a second ejector inlet 142a, a second ejector outlet 142b and a second ejector suction opening 142c. In this example, pressurized air is the motive fluid of the vacuum ejector. In order to avoid additional pipe for supplying the pressurized air for the second vacuum ejector, the second ejector inlet is connected to a second air inlet 143 by a second air channel 146 to be able to use the pressurized air supplied into the second chuck. The second air inlet 143 is provided as a position, at which it can be automatically connected to one air channel or an air outlet embedded in the second chuck, when the second pallet is clamped to the second chuck. Thus, in this example, the second air inlet 143 is formed as a hole from the bottom surface of the second pallet in the vertical direction (Z-direction) to the second air channel 146. The second air channel can have different shapes depending on the position of the second air inlet 143 and the second ejector inlet 142a. The air channel of the second chuck has an air outlet on the top surface of the second chuck which is not shown in the figures. When the second pallet is clamped into the second chuck, the second air inlet of the second pallet is aligned with the air outlet of the second chuck such that the pressurized air can be fed into the ejector through the air channel of the second chuck, the air outlet of the second chuck and the second air inlet of the second pallet. It is also possible to arrange the second ejector in a position that the second air inlet can be directly connected to the second ejector air inlet to save the second air channel.

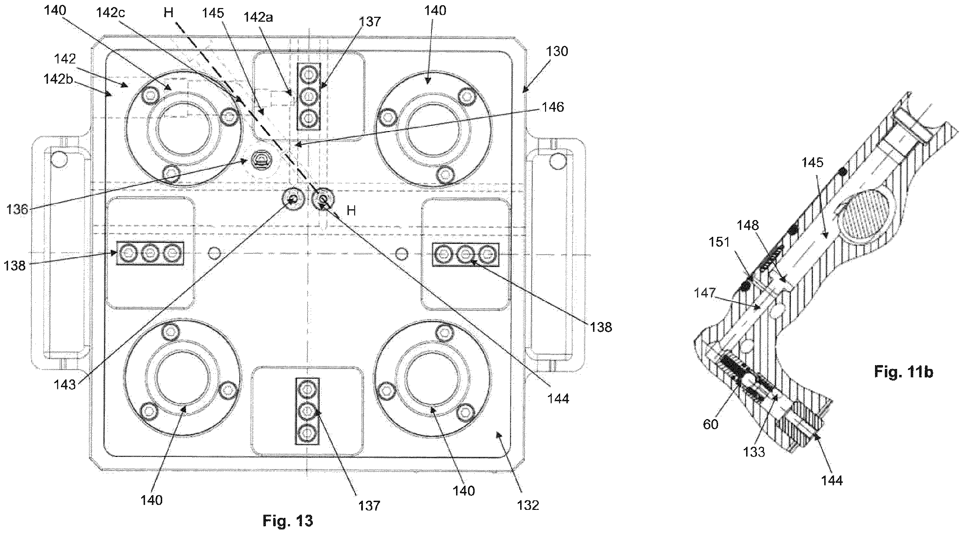

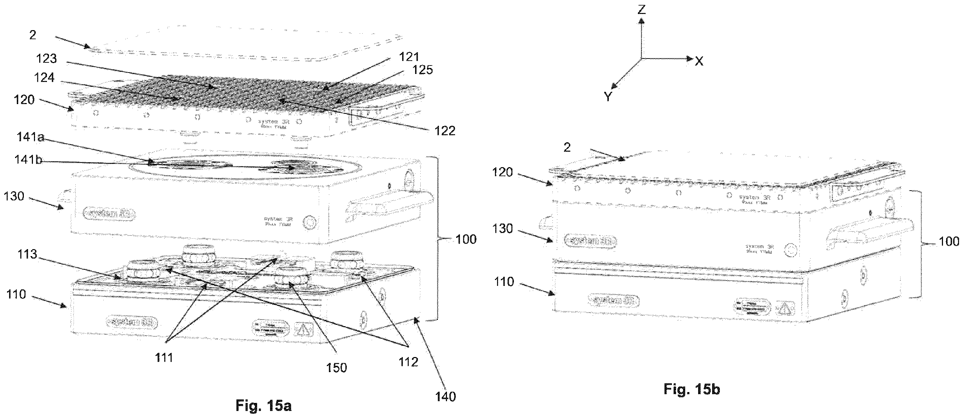

For the second clamping system reference elements are also required. Figure 13 shows a bottom view of the second pallet. A plurality of X reference elements 138, a plurality of Y reference elements 137 and a plurality of Z reference elements 140 are provided on the bottom surface of the second pallet. In particular, all reference elements are formed directly with the second pallet in one piece. It is also possible to form the reference elements separately and mounted on the pallet. Reference elements are also provided on the second chuck. As shown in figure 15a, there are a plurality of X reference elements 112, a plurality of Y reference elements 111 and a plurality of Z reference elements 113 are provided on the top surface of the second chuck 110.

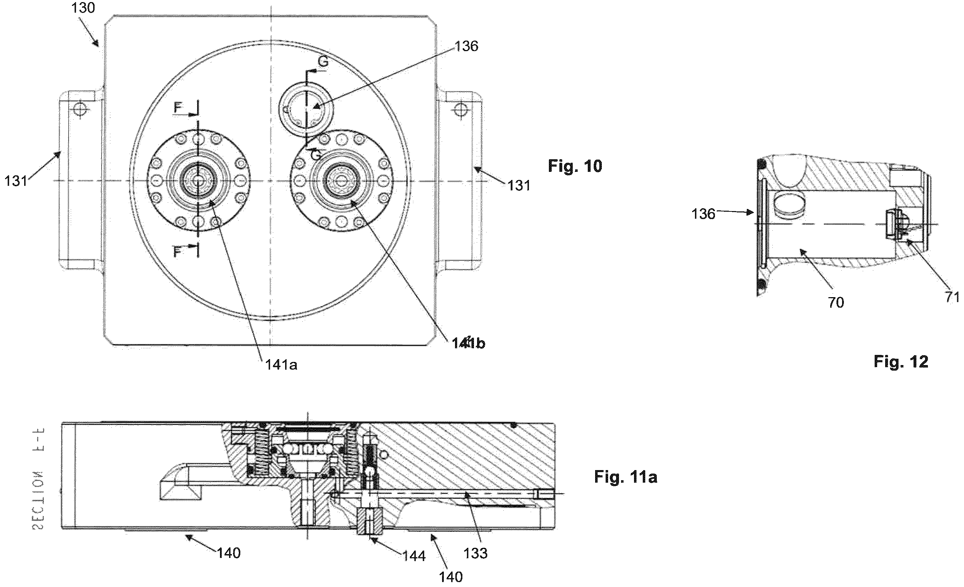

Figure 10 depicts a top view of the second pallet.

Means for monitoring the condition of the vacuum generated by the second vacuum ejector is also provided in the second pallet. Figure 13 shows a second sensing hole 144 formed on the bottom surface of the second pallet to monitor the status of the vacuum. The second sensing hole can also be aligned to a sensing hole on the second chuck. When the second chuck is mounted on the machine table, a vacuum sensing device arranged in the machine cabinet can be communicatively connected to the vacuum sensing hole on the second chuck and further to the second sensing hole 144 of the second pallet. By this way, no additional sensing means is needed. In this example, a second vacuum channel 145 connects the second ejector suction opening 142c to the second pallet vacuum opening 136. Additionally, a second vacuum sensing channel 147 is formed on the extension of the second vacuum channel but separated from it by a second plug 148. The second sensing hole is drilled in the vertical direction (Z-direction) to reach the second vacuum sensing channel. The second sensing hole is not directly connected to the second vacuum channel but directly connected to the second pallet suction opening through a second vacuum connecting hole 151 and the second vacuum sensing channel. In particular, the second vacuum connecting hole is bored vertically from the second suction opening downwards to the second vacuum sensing channel as shown in figure 11b.

During machining liquid may flow into the second suction opening, if the sealing around the second suction opening is not perfect. This can negatively influence the suction function. Therefore, a liquid chamber 70 is formed in the second pallet below the second suction opening as shown in the figure 12 which is a sectional view of the cut along the line G-G shown in the figure 10. The liquid chamber extends from the second suction opening downwards. A second valve 71 is arranged at the end of the liquid chamber close to the bottom surface of the second pallet 132 for allowing to automatically empty the liquid from the liquid chamber when vacuum is deactivated. This further ensures the automatic handling of the pallet, because the liquid chamber must not be manually emptied by the operator. When the second pallet is dismounted or the vacuum pressure is deactivated, the second valve can be automatically opened and the liquid stored in the chamber can flow out from the bottom of the second pallet.

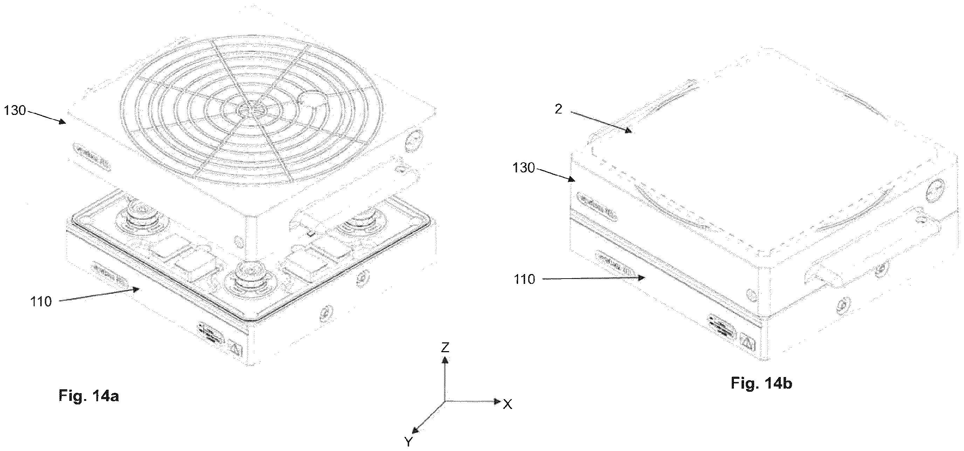

Figures 14a and 14b show one application of the second clamping system comprising a second pallet 130 and a second chuck 110. A workpiece 2 can be directly held by the second pallet by the vacuum generated by the second vacuum ejector, when the workpiece is positioned on the second vacuum opening 136. No additional fixing means is required. By this way, the workpiece can be easily mounted to the pallet and dismounted from the pallet and makes possible to utilize the automatic handling tools.

Figures 15a and 15b show another application of the second clamping system, in which a second fixture 120 is arranged between the second pallet and the workpiece. Figure 15a illustrates a three-dimensional view of the second clamping system 100 with the second fixture in an unclamped state. This example shows an application of clamping a workpiece on a machine table. The second chuck 110 can be mounted on the machine table. The second pallet 130 can be clamped through a clamping mechanism into the second chuck. In this example, the clamping mechanism 150 integrated on the second chuck is applied for connecting the second chuck and the second pallet, but it is not mandatory to utilize this type of the clamping mechanism, since other clamping mechanism such as a drawbar shown in the first clamping system is also applicable for clamping the second chuck and the second pallet

On the top of the second pallet, the second fixture can be mounted. The second fixture has at least one second fixture suction opening 121, 122, 123, 124 for allowing the vacuum going through to hold the workpiece mounted thereon. The second fixture suction openings are through holes. In addition, a plurality of fixture channels are formed on the bottom surface of the second fixture. When the second fixture is fixed on the second pallet, the second vacuum opening 136 of the second pallet can be connected with the second fixture suction openings through the fixture channels. By this way, the vacuum generated by the vacuum ejector can go through the second pallet suction opening and the fixture openings to reach the workpiece. Moreover, different suction areas can be activated by inserting a fixture sealing element into the second fixture grooves 125 on the second fixture.

For holding the fixture on the pallet, different connecting mechanism can be applied. Figure 7a shows one variant of screwing the first fixture on the first pallet. Figure 15a shows another variant of clamping the second fixture on the second pallet by two additional chucks, a third chuck 141a and fourth chuck 141b. In this variant, a first valve 60 is arranged in the second pallet as shown in the figure 11b which are the sectional view cut along the line H-H shown in the figure 13. The first valve is configured to be closed automatically if air is supplied and opened if the air is stopped. The third chuck 141 and fourth chuck for clamping the second fixture on the second pallet requires also pressurized air, thus pressured air must be provided to these two chucks as well. The second sensing hole 144 serves also for supplying the air from the second chuck. In order to prevent air from blowing up through the second sensing hole 144, when loading the second fixture but also allowing vacuum flowing to pass through to enable vacuum suction detection, the first valve is arranged in the second sensing hole. On the lower side of the first valve, a third air supply channel 133 is provided, which is shown also in the figure 11a. The second vacuum sensing channel is connected to the other side of the first valve. When the valve is closed, no air can be blew into the second sensing channel.

Before loading the fixture, the third chuck and fourth chuck must be opened. Thus, the pressurized air is required to open the chucks. The pressurized air is supplied through the second sensing hole 144 into the third air supply channel 133. At this moment, the first valve 60 is automatically closed, such that the supplied air is directed to the third chuck and fourth chuck not through the second valve to the suction area. Then the fixture can be clamped into these two chucks and the air supply is stopped to close the chucks.

When the fixture is clamped into the second pallet by the third chuck and the fourth chuck, the vacuum can be started for suction. The first valve is automatically opened because the air supply is stopped. During the suction, the second sensing hole 144 and the third air supply channel 133 serve for sensing the vacuum, because they are communicatively connected through the first valve to the second vacuum sensing channel.

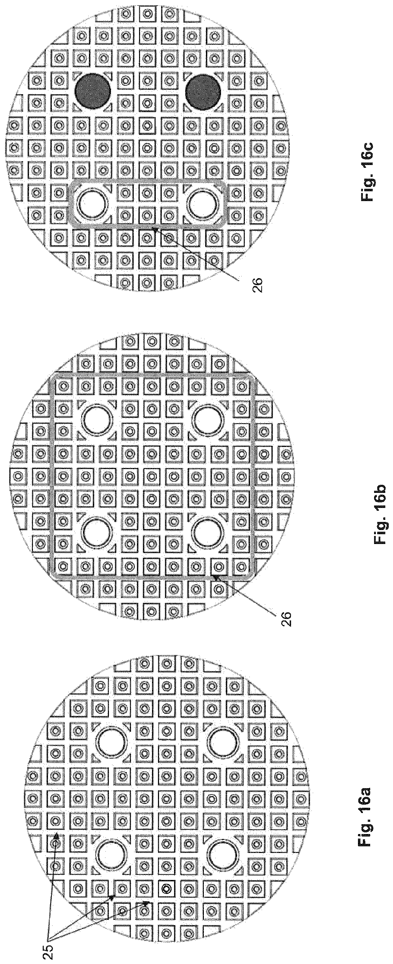

Figures 16a, 16b and 16c illustrate how the suction area on the fixture can be selected using the first fixture as an example. However, this design is also applicable for the second fixture. As shown in the figure 16a, a plurality of first fixture sealing grooves 25 are provided. In this example, the sealing grooves are arranged in a regular manner in rows and columns. However, the sealing grooves can also be arranged in an irregular manner or in a round shape. Figure 16b shows the situation when all four suction areas should be activated. To achieve this, a first sealing element 26 is inserted into the sealing grooves around the suction area. The figure 16c illustrates the situation that two suction areas should be selected. Thus, the first sealing element is inserted around these two suction area and the other suction arear are covered.

### LIST OF REFERENCES

- 1: first clamping system
- 2: workpiece
- 10: first chuck
- 11b, 11c, 11d Y: reference element on the first chuck
- 12a, 12b, 12c, 12d X: reference element on the first chuck
- 13a, 13b Z: reference element on the first chuck
- 20: first fixture
- 21, 22, 23, 24: first fixture suction opening
- 25: first fixture sealing grove
- 26: first fixture sealing element
- 30: first pallet
- 31a,31b: first pair of slots
- 32: first groove
- 33: upper section of the first pallet
- 34: lower section of the first pallet
- 35: first ejector entry
- 35a: first air outlet
- 35b: first cap
- 36: first pallet suction opening
- 37a, 37b, 37c, 37d X: reference element on the first pallet
- 38a, 38b, 38c, 38d, 38e, 38f, 38g, 38h Z: reference element on the first pallet
- 39: a first sealing
- 40a, 40b, 40c, 40d Y: reference element on the first pallet
- 41: holes for screwing fixture
- 42: first vacuum ejector
- 42a: first ejector inlet
- 42b: first ejector outlet
- 42c: first ejector suction opening
- 43: first air inlet
- 44: first vacuum connecting hole
- 45: first vacuum hole
- 46: first air channel
- 47a: first vacuum suction channel
- 47b: first vacuum sensing channel
- 48: first plug
- 49: first sensing hole
- 50: drawbar
- 60: first valve
- 70: liquid chamber
- 71: second valve
- 100: second clamping system
- 110: second chuck
- 111: Y reference element on the second chuck
- 112: X reference element on the second chuck
- 113: Z reference element on the second chuck
- 120: second fixture
- 121, 122, 123, 124: second fixture suction opening
- 125: second fixture sealing groove
- 130: second pallet
- 131: second pallet gripper pair
- 132: bottom surface of the second pallet
- 133: third air supply channel
- 135: second ejector entry
- 135a: second air outlet
- 135b: second cap
- 136: second pallet suction opening
- 137: Y reference element on the second pallet
- 138: X reference element on the second pallet
- 140: Z reference element on the second pallet
- 141a: third chuck for fixture clamping
- 141b: fourth chuck for fixture clamping
- 142: second vacuum ejector
- 142a: second ejector inlet
- 142b: second ejector outlet
- 142c: second ejector suction opening
- 143: second air inlet
- 144: second sensing hole
- 145: second vacuum channel
- 146: second air channel
- 147: second vacuum sensing channel
- 148: second plug
- 150: clamping mechanism
- 151: second vacuum connecting hole

## Claims

1. A clamping system comprising a chuck (10, 110) and a pallet (30, 130) for mounting an object (2, 20) thereon, wherein the chuck comprises a plurality of chuck reference elements in X-, Y- and Z-directions (12a, 12b, 12c, 12d, 11b, 11c, 11d, 13a, 13b), wherein the pallet comprises a plurality of pallet reference elements (37a, 37b, 37c, 37d, 139, 40a, 40b, 40c, 40d, 137, 38a, 38b, 38c, 38d, 140) in X-, Y- and Z directions, wherein a pallet locking mechanism is provided on the pallet and a chuck locking mechanism is provided on the chuck, wherein the pallet can be clamped to the chuck by interacting the pallet locking mechanism with the chuck locking mechanism, wherein when the pallet is clamped to the chuck, the pallet reference elements are aligned with the chuck reference elements in X-, Y- and Z-directions,
**characterized in that**
the pallet includes a vacuum ejector (42, 142) to generate a vacuum and a pallet suction opening (36, 136) communicatively connected to the vacuum ejector for holding the object positioned on the pallet by the generated vacuum.

2. The clamping system according to claim 1, wherein the pallet is provided with a recess arranged inside the pallet for arranging the vacuum ejector therein, in particular the elongated direction of the recess is in parallel to the top surface of the pallet.

3. The clamping system according to claim 1 or 2, wherein the pallet is provided with an air inlet (43, 143) for supplying pressurized air into the vacuum ejector and the air inlet is arranged in a manner that the pressurized air supplied into the chuck enters into the air inlet automatically, when the pallet is clamped with the chuck.

4. The clamping system according to claim 3, wherein the air inlet is arranged on the bottom surface of the pallet and an air supply outlet is arranged on the top surface of the chuck and the air inlet of the pallet is automatically aligned with the air supply outlet of the chuck when the pallet is claimed with the chuck.

5. The clamping system according to one of claims 1 to 4, wherein the pallet suction opening is covered by a filter, in particular the filter is a mesh filter.

6. The clamping system according to one of claims 1 to 5, wherein a pallet sensing mechanism is integrated in the pallet and a chuck sensing mechanism is integrated in the chuck, wherein the pallet sensing mechanism and the chuck sensing mechanism are configured that they are automatically aligned when the pallet is clamped with the chuck, in particular the pallet sensing mechanism and the chuck sensing mechanism are applied for monitoring the condition of the vacuum generated by the vacuum ejector.

7. The clamping system according to claim 6, wherein the pallet sensing mechanism includes a pallet sensing hole (49, 144) which is provided on the bottom surface of the pallet (30, 130) and is communicatively connected to the pallet suction opening (36, 136), in particular the sensing hole is connected to the pallet suction opening through a vacuum sensing channel (47b,147) and a vacuum connecting hole (44, 151).

8. The clamping system according to one of the claims 1 to 7, wherein an ejector entry (35, 135) connected to the recess is provided on the surface of the pallet for inserting the vacuum ejector into the recess arranged inside the pallet and the ejector can be covered by a cap (35b, 135b) having an air outlet (35a, 135a) formed thereon.

9. The clamping system according to one of claims 1 to 8, wherein the clamping system further comprises a fixture (20, 120) for being mounted on the pallet for holding the workpiece thereon, wherein the fixture has at least one fixture suction opening (21, 22, 23, 24, 121, 122, 123, 124) which is connected with the pallet suction opening, when the fixture is mounted on the pallet.

10. The clamping system according to the claim 9, wherein the fixture includes at least two fixture suction openings for providing at least two fixture suction areas and a plurality of sealing grooves (25), wherein a fixture sealing element (26) can be inserted into the fixture sealing groove for selectively activate the fixture suction area.

11. The clamping system according to one of claims 1 to 10, wherein a liquid chamber (70) is arranged below the pallet suction opening (36, 136) for storing the liquid entering from the pallet suction opening.

12. The clamping system according to claim 11, wherein a second valve (71) is mounted at one end of the liquid chamber to close or open the liquid chamber.
